# EUROPEAN PATENT APPLICATION

(11) **EP 1 172 053 A2**
(43) Date of publication of application: **16.01.2002**
(21) Application number: 01202622.5
(22) Date of filing: 09.07.2001
(51) Int. Cl.: A47J 27/022

(54) **Method for manufacturing a container for cooking or frying and thus manufactured container**

(30) Priority: 13.07.2000 US 615798
(71) Applicant: Demeyere, Maurits Jan Maria, B-2520 Edegem (BE)
(72) Inventor: Demeyere, Maurits Jan Maria, B-2520 Edegem (BE)
(74) Representative: Debrabandere, René

(57) **Abstract**

The invention relates to a method for manufacturing a container for cooking or frying, according to which a body (1), which comprises a bottom (2) with an outer side, and a wall (3) standing on said bottom, is shaped from stainless steel; a disc (4) from heat distributing material having an outer side is fixed by to said outer side of the bottom, and said outer side of the disc (4) is covered with a bottom cover (5) from stainless steel provided on its circumference with a rim (7). Said rim (7) is hermetically welded to the outer surface of the body wall (3).

## Description

The present invention concerns a method for manufacturing a container for cooking or frying, of the type comprising a body with a bottom and a mostly cylindrical wall standing on said bottom, a heat-distributing disc in aluminum-alloy or copper or other metal fixed against the bottom and a cover having a rim enveloping a lower portion of the wall and fixed to it.

The container is mostly in steel, for instance stainless steel. The cover can also be of stainless steel, but can also be of other metal.

In known methods, the bottom or the bottom cover is fixed to the heat distributing disc in aluminum by putting aluminum brazing powder on the inside of the cover or on the disc and pressing the cover against the disc while heating above the melting point of the aluminum brazing powder but just below the melting point of the aluminum and naturally below the melting point of the stainless steel which is much higher.

The same method is used to fix the heat distributing disc against the container.

In stead of aluminum brazing powder, copper brazing powder, pure silver brazing powder or other brazing materials specific for the material of the disc.

With a disc of aluminum or aluminum alloy, other technologies are possible whereby the different materials are warmed up and pressed at extreme high pressure against each other to allow molecular bonding of the different materials.

These different methods and materials allow, after cooling, that the different layers formed by the cover and the heat distributing disc are fixed to the container.

However aluminum, aluminum alloy and the different brazing powders and brazing materials all have a relatively low melting point (about 1112°F).

Accidentally, the container may be put on a heater without food or liquid therein or he may be heated too long so that all liquid evaporates. In these events, the container may overheat and the temperature of the bottom of the container may raise above said melting point of aluminum or the melting point of the brazing materials.

The consequence is that, with the known containers of the above kind, when a person takes away the overheated container from the heat source, the bottom cover is released from the body wall of the container due to the fact that the aluminum or brazing materials are molten and does no longer fasten the bottom cover to the body wall.

This person can then be seriously burnt by the very hot cover and aluminum falling down. Moreover in certain cases the liquid aluminum can drip or flow on this person causing burns which may be extremely serious.

Moreover, the existing covers that cover the copper or aluminum heat distributing disc are only mechanically close to the body of the container and there are always small or even large air gaps in which liquid and dirt can accumulate and be at the origin of corrosion, oxidation or accumulation of bacteria.

An object of the present invention is to remedy the aforementioned disadvantage and to provide a method for manufacturing a container for cooking or frying which permits to obtain a container with higher safety so that the heat distributing disc or the cover never can fall off or be broken away from the container.

This object is reached according to the invention by a method according to which a body, which comprises a bottom with an outer side, and a wall standing on the bottom, is shaped from stainless steel. A disc from heat distributing material having an outer side is fixed to said outer side of the bottom. Said outer side of the disc is covered with a bottom cover from stainless steel provided on its circumference with a rim. Said rim is hermetically welded to the outer surface of the body wall.

Welding can for example be performed by laser welding, plasma welding or other suitable welding techniques.

Another object of the invention is to provide a more safe container for cooking or frying.

This object is met by a container manufactured according to the above-mentioned method, said container comprising a body with a wall and a bottom with an outer side, a heat-distributing disc fixed against said outer side of the bottom and a bottom cover covering the disc and having a rim enveloping a lower portion of the body wall and welded to the body wall.

The bottom cover may contain different layers.

Still another object is to provide such container which is suitable not only for gas heating, electric plates with resistances, ceramic plates and halogen heating, but also for induction heating.

The bottom cover can thereto contain at least three layers, one of the layers being from magnetic stainless steel.

To more clearly show the characteristics of the invention, a preferred embodiment of a method for manufacturing a container for cooking or frying and a thus manufactured container are described in the following, as an example without any limiting character, with reference to the accompanying drawings, in which:
Figure 1 is a front view with partial section of a container for cooking according to the invention;
Figure 2 is a front view similar to that of figure 1, but with respect to a container for frying according to the invention;
Figure 3 shows on an enlarged scale the portion indicated by F3 in figure 1.

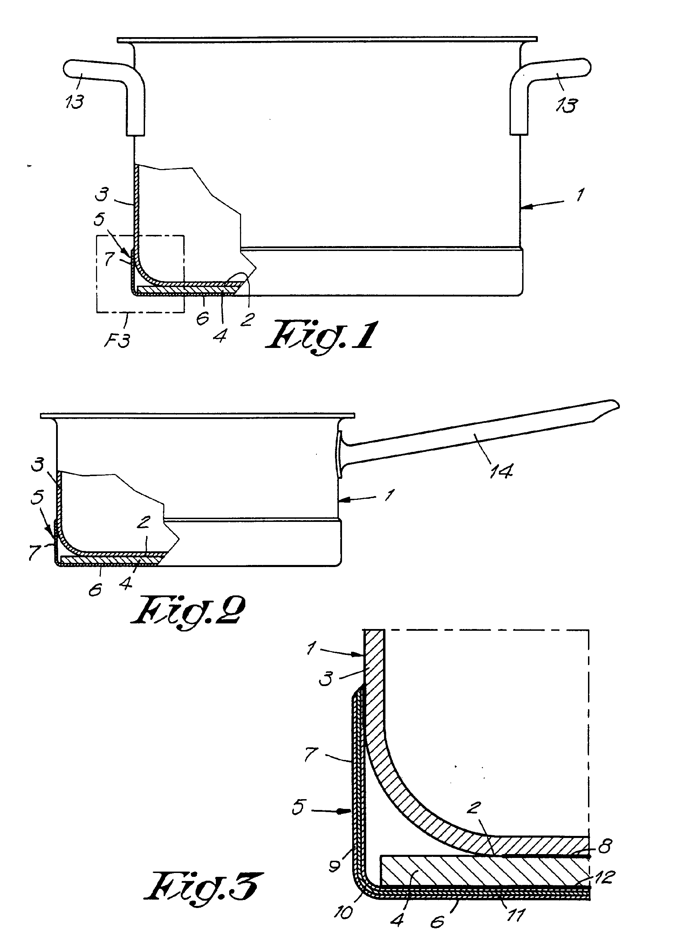

A container for cooking, shown in figure 1, mainly consists of a cylindrical body 1, containing a bottom 2 and a cylindrical wall 3 standing on the bottom 2 and integral with the bottom 2, a heat-distributing disc 4 covering the bottom 2 on the outside and a bottom cover 5, consisting of a flat central part 6 and a rim 7 on its circumference, said rim 7 being hermetically welded by laser welding to the bottom part of the wall 3.

The body 1 is made by shaping a sheet of stainless steel, for example from the type SAE series 300, with a thickness between 6,096 and 1,52 mm (0,024 and 0,06 inch).

The heat-distributing disc 4 is preferably from copper with a thickness of 2,03 tot 4,06 mm (0,08 to 0,16 inch). It is soldered or brazed to the outer side of the bottom 2 by means of silver or a silver alloy.

The disc 4 or the bottom 2 is covered with silver or a silver alloy powder and the disc 4 and the bottom 2 are pressed together while being heated above the melting point of silver, which is about 961°C (1762°F), or above the melting point of the silver alloy. The liquid silver or silver alloy is solidified by cooling to form a connecting layer 8 as shown in figure 3.

As also shown in figure 3, the bottom cover 5 is a shaped co-laminate of at least three layers 9, 10 and 11 of stainless steel. Both outer layers 9 and 11 are from nonmagnetic stainless steel, more particularly from steel SAE 30340, while the middle layer 10 is from magnetic stainless steel, for example from steel of the type SAE series 400.

The total thickness of the bottom cover 5 is between 0,51 and 1,02 mm (0,02 and 0,04 inch).

The central part 6 of the bottom cover 5 is soldered or brazed to the heat-distributing copper disc 4 in the same way as above-described, by putting silver or a silver alloy powder on the central part 6 or the disc 4 and pressing said central part 6 and the disc 4 together while heating until the silver or a silver alloy is molten. After cooling the silver or silver alloy layer 12 connects the part 6 to the disc 4.

Both silver or silver alloy layers 8 and 12 may be formed simultaneously, by a single heating and cooling step.

The quantity of silver or silver alloy powder used, is such that the layers 8 and 12 do not protrude significantly outside the disc 4.

Finally the rim 7, which is perpendicular to the central part 6 and is slanted at its outermost edge, is welded to the outer side of the wall 3 by laser welding, assuring a continuous connection and hermetic seal between the rim 7 and the outer side of the bottom part of the body wall 3.

During welding stainless steel material of the rim 7 and of the wall 3 melt together.

Two handles 13 may be attached to the body 1 of the container for cooking.

A container for frying of frying pan can be manufactured in exactly the same way. The only differences are that the body 1 is proportionally lower and mostly only one handle 14 is attached to the body 1. Such frying pan is shown in figure 2.

By overheating the container, the silver or silver alloy layers 8 and 12 may perhaps melt, what requires a temperature which is already higher than when is soldered or brazed by aluminum, but to destroy the laser weld, heating to a temperature above 2000°C (3632°F) is required.

This means that due to the welding, it is impossible that the bottom cover 5 falls off from the body 1, as well by consumer as professional use of the container on all kinds of heat sources.

The above-described construction also ensures a flat bottom of the container which remains perfectly flat when heated.

The invention is by no means limited to the above-described and in the accompanying drawings represented forms of embodiment; on the contrary, the above-described method and container can be performed or made in all sorts of variants while still remaining within the scope of the invention.

More particular, the different thickness values mentioned here before are only examples and other values are possible.

The heat-distributing disc 4 must not necessarily be soldered or brazed to the body 1 and to the bottom cover 5. It can also be welded or high pressure bonded to the body 1 and/or cover 5.

Instead of laser welding the rim of the cover to the container, other welding techniques may be used such as for example plasma welding and TIG-welding.

The heat-distributing disc 4 may be from other materials than copper and the bottom cover 5 must not necessarily be a co-laminate.

## Claims

1. Method for manufacturing a container for cooking or frying, according to which a body (1), which comprises a bottom (2) with an outer side, and a wall (3) standing on said bottom, is shaped from stainless steel; a disc (4) from heat distributing material having an outer side is fixed by to said outer side of the bottom, and said outer side of the disc (4) is covered with a bottom cover (5) from stainless steel provided on its circumference with a rim (7), **characterised in that** said rim (7) is hermetically welded to the outer surface of the body wall (3).

2. Method according to claim 1, **characterised in that** the rim (7) is welded to the body wall (3) by laser welding.

3. Method according to claim 1 or 2, **characterised in that** the disc (4) from heat- distributing material is soldered or brazed to the bottom (2) of the body (1) by means of silver or silver alloy.

4. Method according to any one of the preceding claims, **characterised in that** the bottom cover (5) is soldered or brazed to the disc (4) from heat-distributing material by means of silver or silver alloy.

5. Container for cooling or frying, comprising a body (1) with a wall (3) and a bottom (2) with an outer side, a heat-distributing disc (4) fixed against said outer side of the bottom (2) and a bottom cover (5), covering the disc (4) and having a rim (7) enveloping a lower portion of the body wall (3), **characterised in that** the rim (7) is welded to the body wall (3).

6. Container according to claim 5, **characterised in that** the rim (7) is perpendicular to the bottom (2) of the body (1).

7. Container according to claim 5 or 6, **characterised in that** the heat-distributing disc (4) is from copper.

8. Container according to any one of claims 5 to 7, **characterised in that** the bottom cover (5) is a co-laminate of at least three layers (9,10,11).

9. Container according to claim 8, **characterised in that** one layer (10) is from a magnetic stainless steel.

10. Container according to claim 8, **characterised in that** the bottom cover (5) comprises two outer layers (9,11) of stainless steel of the type SAE 300 series, and an intermediate layer (10) of stainless steel of the type SAE 400 series.

11. Container according to any one of claims 5 to 10, **characterised in that** the heat-distributing disc (4) is soldered or brazed to the bottom (2) of the body (1) by means of silver or a silver alloy.

12. Container according to any one of claims 5 to 11, **characterised in that** the bottom cover (5) is soldered or brazed to the heat-distributing disc (4) by means of silver or a silver alloy.
